# DEMANDE DE BREVET EUROPEEN

(11) **EP 2 541 942 A1**
(43) Date de publication de la demande: **02.01.2013**
(21) Numéro de dépôt: 12290207.5
(22) Date de dépôt: 25.06.2012
(51) Int. Cl.: H04N 9/76

(54) **Procédé et dispositif de superposition en temps réel d'images issues d'au moins deux flux vidéo**

(30) Priorité: 30.06.2011 FR 1102049
(71) Demandeur: MBDA France, 75016 Paris (FR)
(72) Inventeur: Gauquelin, Xavier, 94700 Maison Alfort (FR); Picard, Hervé, 91260 Juvisy sur Orge (FR); Pilchen, Jérôme, 92320 Chatillon (FR)
(74) Mandataire: Hauer, Bernard

(57) **Abrégé**

- Procédé et dispositif de superposition en temps réel d'images issues d'au moins deux flux vidéo.
- Le dispositif (1) comporte des moyens (7) pour affecter, pour chaque pixel d'une seconde image, une partie des trois composantes (rouge, vert, bleu) définissant la couleur constituant le pixel, à une composante alpha contenant une information relative à la transparence et permettant sa gestion, de manière à obtenir une image codée, et des moyens (2) comprenant une carte d'électronique numérique (9) qui est formée de manière à décoder ladite image codée pour extraire l'information relative à la transparence, et à fusionner cette image ainsi décodée avec une première image, en tenant compte de ladite information relative à la transparence, l'image résultant de cette fusion étant affichée par des moyens (5) appropriés.

## Description

La présente invention concerne un procédé et un dispositif de superposition en temps réel d'images issues d'au moins deux flux vidéo, avec une gestion de la transparence entre ces images (pour de la réalité augmentée par exemple).

La superposition en temps réel d'images de plusieurs flux vidéo, telle que considérée dans le cadre de la présente invention, peut notamment être utilisée dans un simulateur d'entraînement au tir avec un homme dans la boucle ou dans des jeux vidéos.

La superposition d'images issues de plusieurs flux vidéos est bien connue. A titre d'illustration, on peut par exemple citer la présentation météo à la télévision. Un inconvénient de cette superposition réside dans la difficulté à gérer la transparence entre les images à superposer, tout en conservant un rendu des couleurs et/ou des textures qui soit réaliste et une latence de traitement (retard généré par le traitement) qui ne soit pas trop élevée (à savoir non perceptible à l'oeil nu).

La seule solution connue à ce jour pour essayer de résoudre ce problème est de réaliser une incrustation vidéo de manière logicielle, avec une acquisition des deux flux vidéos et une génération de l'image résultante.

Toutefois, cette technique usuelle présente des inconvénients. En effet, l'incrustation vidéo, avec une gestion de la transparence par logiciel, peut provoquer une latence importante dans le traitement de l'image et ainsi une désynchronisation perceptible entre les déplacements individuels des flux vidéos superposés. Aussi, dans l'application à un simulateur d'entraînement au tir (avec un homme dans la boucle) par exemple, la perception par l'utilisateur du simulateur, de ces retards (supérieurs à 120 ms) et/ou des décalages engendrés, est rédhibitoire.

Des contournements et des optimisations logiciels destinés à la réduction de ces effets peuvent être mis en oeuvre, mais ils requièrent un matériel dédié spécifique (carte graphique), ainsi qu'une forte expertise en développement et en maintenance des composants logiciels développés. De plus, l'optimisation réalisée alors permet uniquement de se placer juste au-dessous du seuil de perception de la latence, ce qui rend impossible tout traitement complémentaire, tel qu'une amélioration esthétique du rendu ou une augmentation de la résolution par exemple.

Cette solution usuelle de gestion de la transparence par logiciel n'est donc pas satisfaisante pour les applications envisagées.

La présente invention a pour objet de remédier à ces inconvénients. Elle concerne un procédé de superposition en temps réel d'images issues d'au moins deux flux vidéo, permettant notamment de gérer la transparence entre les images, tout en conservant un rendu des couleurs et/ou des textures qui soit réaliste et une latence de traitement qui soit faible.

A cet effet, selon l'invention, ledit procédé, selon lequel on réalise, de façon automatique et répétitive, la suite d'opérations successives suivante :
a) on reçoit une première image faisant partie d'un premier flux vidéo ;
b) on reçoit au moins une seconde image faisant partie d'au moins un second flux vidéo ;
c) on superpose ladite seconde image à ladite première image ; et
d) on affiche cette superposition,
   est remarquable en ce que :
   - à l'étape b) on affecte, pour chaque pixel de la seconde image, une partie des trois composantes (rouge, vert, bleu) définissant la couleur constituant le pixel, à une composante alpha contenant une information relative à la transparence et permettant sa gestion, de manière à obtenir une image codée ; et
   - à l'étape c), au niveau d'une carte d'électronique numérique :
      - on décode ladite image codée pour extraire les informations relatives à la transparence ; et
      - on fusionne l'image ainsi décodée et ladite première image, en tenant compte de ladite information relative à la transparence (qui a été extraite par le décodage), l'image résultant de cette fusion étant affichée à l'étape d).

Les étapes précédentes sont bien entendu mises en oeuvre de façon répétitive en temps réel pour la succession d'images desdits flux vidéo.

Ainsi, grâce à l'invention, on est en mesure de réaliser une incrustation d'images en temps réel avec la prise en compte de la transparence, et ceci en diminuant considérablement la latence. Cette diminution de la latence permet d'éviter des retards et/ou des décalages entre les images qui seraient rédhibitoires pour certaines applications. De plus, la marge ainsi obtenue permet également de réaliser des traitements complémentaires sur les images fusionnées, comme précisé ci-dessous.

De façon avantageuse, la composante alpha qui est utilisée dans le cadre de la présente invention est codée sur six bits soit 2⁶ niveaux de transparence. De plus :
- dans une première variante de réalisation, permettant d'obtenir une image acceptable visuellement, ces (de préférence six) bits de la composante alpha sont répartis sur les trois couleurs avec le reste de bits (de préférence dix-huit) répartis uniformément sur les trois couleurs ; et
- dans une seconde variante de réalisation, les bits de la composante alpha sont répartis de façon non uniforme sur les trois couleurs, en privilégiant en particulier une couleur (le vert par exemple auquel l'oeil humain est plus sensible).

Dans un mode de réalisation préféré, ladite carte d'électronique numérique est pourvue d'un circuit de type FPGA (« Field-Programmable Gate Array » en anglais).

En outre, avantageusement, ledit premier flux vidéo peut être généré par une caméra vidéo usuelle. De plus, dans un mode de réalisation particulier, ladite seconde image est de type virtuel, et elle peut être générée (par des moyens informatiques usuels) de façon anticipée de manière à la synchroniser sur la première image à l'étape c).

La présente invention permet, en particulier, d'obtenir les avantages suivants :
- grâce notamment à un traitement d'incrustation matériel, mis en oeuvre par ladite carte d'électronique numérique avec une unité FPGA, une optimisation de la latence de traitement (avec une latence maximale qui reste inférieure au seuil de perception du décalage). La marge acquise permet d'envisager des traitements d'images complémentaires, tels qu'un filtrage infrarouge, une extraction de contour ou une amélioration esthétique par exemple ;
- une gestion de la transparence entre les différents flux vidéos, qui permet par exemple d'ajouter de la fumée, un nuage,...., notamment lors de la superposition d'images virtuelles sur un paysage réel filmé ;
- une anticipation de la génération du flux superposé (pour des cibles virtuelles par exemple lorsque l'on connaît les mouvements de ces cibles) ; et
- une indépendance par rapport aux types de flux vidéo numérique (DVI, CaméraLink, Gigavision,...) utilisés.

Dans un mode de réalisation particulier, on met en oeuvre les étapes b) à d) pour une pluralité de secondes images, c'est-à- dire que l'on superpose à chaque (première) image dudit premier flux vidéo (par exemple un flux généré par une caméra filmant une scène réelle) plusieurs secondes images (virtuelles) illustrant, par exemple, chacune une ou plusieurs cibles virtuelles (en mouvement ou non).

La présente invention concerne également un dispositif de superposition automatique, en temps réel, d'images issues d'au moins deux flux vidéo.

Selon l'invention, ledit dispositif du type comportant :
- des premiers moyens pour recevoir une première image faisant partie d'un premier flux vidéo ;
- des deuxièmes moyens pour recevoir au moins une seconde image faisant partie d'au moins un second flux vidéo ;
- des troisièmes moyens pour superposer ladite seconde image à ladite première image ; et
- des quatrièmes moyens pour afficher cette superposition,
est remarquable en ce qu'il comporte, de plus, des moyens pour affecter, pour chaque pixel de chaque seconde image, une partie des trois composantes (rouge, vert, bleu) définissant la couleur constituant le pixel, à une composante alpha contenant une information relative à la transparence et permettant sa gestion, de manière à obtenir une image codée, et en ce que lesdits troisièmes moyens comprennent une carte d'électronique numérique qui est formée de manière à décoder ladite image codée pour extraire l'information relative à la transparence, et à fusionner cette image ainsi décodée avec ladite première image, en tenant compte de ladite information relative à la transparence, l'image résultant de cette fusion étant affichée par lesdits quatrièmes moyens.

Avantageusement, ledit dispositif comporte, également, des moyens pour générer ledit premier flux vidéo, ainsi que des moyens pour générer ledit second flux vidéo.

En outre, dans un mode de réalisation particulier, lesdits deuxièmes moyens sont formés de manière à recevoir au moins deux secondes images, et lesdits troisièmes moyens sont formés de manière à superposer, à chaque itération, lesdites (au moins deux) secondes images à ladite première image.

La présente invention concerne également :
- un simulateur de tir ; et/ou
- un jeu vidéo,
qui comportent un dispositif tel que celui précité.

De nombreuses autres applications de l'invention sont également envisageables. On peut citer notamment, à titre non limitatif :
- la réalité augmentée ;
- une aide opératoire dans le domaine médical ; et
- une aide à la conception de design d'automobiles.

Les figures du dessin annexé feront bien comprendre comment l'invention peut être réalisée. Sur ces figures, des références identiques désignent des éléments semblables.

La figure 1 est le schéma synoptique d'un dispositif conforme à la présente invention.

La figure 2 est une représentation schématique permettant d'expliquer la réservation de pixels telle que mise en oeuvre dans le cadre de la présente invention.

Les figures 3A, 3B, et 3C illustrent respectivement une image issue d'un premier flux vidéo, une image issue d'un second flux vidéo, et l'image résultante, qui est générée et affichée par le dispositif conforme à la présente invention.

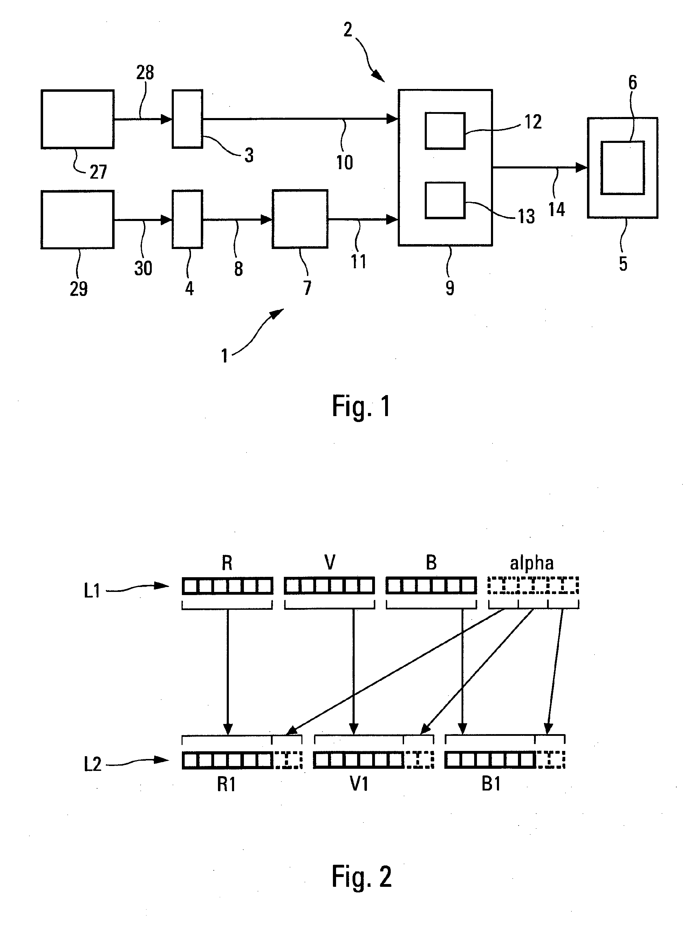

Le dispositif 1 conforme à l'invention et représenté schématiquement sur la figure 1 est destiné à réaliser la superposition en temps réel d'images issues d'au moins deux flux vidéo, avec une gestion de la transparence entre ces images (pour de la réalité augmentée par exemple). On sait qu'un flux vidéo est composé d'une succession d'images générées de façon répétitive, en nombre suffisant (par exemple vingt-cinq par seconde) pour créer une illusion de mouvement pour un oeil humain, auquel on présente cette succession d'images.

Pour ce faire, ledit dispositif 1 est du type comportant :
- des moyens 3 usuels d'acquisition, de façon répétitive, de premières images vidéo faisant partie d'un premier flux vidéo ;
- des moyens 4 usuels d'acquisition, de façon répétitive, de secondes images vidéo faisant partie d'un second flux vidéo ;
- des moyens 2 pour superposer, de façon répétitive, chaque seconde image à la première image correspondant au même instant d'échantillonnage ; et
- des moyens 5 pour afficher, de façon répétitive en temps réel, le flux d'images résultant de cette superposition, sur au moins un écran de visualisation 6 usuel de manière à générer une restitution d'images animées.

Selon l'invention, ledit dispositif 1 comporte, de plus, des moyens 7 pour affecter par traitement logiciel, pour chaque pixel de chaque seconde image (reçue par une liaison 8 desdits moyens 4), une partie des trois composantes (rouge, vert, bleu) définissant la couleur constituant le pixel, à une composante alpha (également reçue des moyens 4) contenant une information relative à la transparence et permettant de gérer cette transparence, de manière à obtenir à la sortie des moyens 7 une image codée.

De plus, selon l'invention, lesdits moyens 2 comprennent une carte d'électronique numérique 9 pourvue d'un circuit intégré programmable de type FPGA (« Field-Programmable Gate Array » en anglais). Cette carte d'électronique numérique 9 est reliée par l'intermédiaire de liaisons 10 et 11 respectivement auxdits moyens 3 et 7 et comprend :
- d'une part, des moyens 12 destinés à décoder l'image codée (reçue par la liaison 11) pour extraire l'information relative à la transparence ; et
- d'autre part, des moyens 13 destinés à fusionner l'image ainsi décodée (par les moyens 12) et ladite première image (reçue des moyens 3), en tenant compte de ladite information relative à la transparence (qui a été extraite par les moyens 12).

L'image qui résulte de cette fusion est ensuite transmise via une liaison 14 auxdits moyens 5 qui l'affichent sur l'écran de visualisation 6.

Ainsi, le dispositif 1 conforme à l'invention est en mesure de réaliser une incrustation d'images, automatiquement et en temps réel, avec la prise en compte de la transparence, et ceci en diminuant considérablement la latence. La marge ainsi obtenue permet de réaliser des traitements complémentaires sur les images fusionnées, comme précisé ci-dessous. Ce dispositif 1 peut notamment être appliquée à un simulateur d'entraînement au tir avec un homme dans la boucle, ou à des jeux vidéos.

La solution conforme à l'invention consiste donc à tenir compte de la transparence via un traitement en deux étapes, comprenant :
A/ tout d'abord un traitement logiciel (moyens 7) ;
B/ puis un traitement matériel (carte dédiée 9 avec une unité FPGA de gestion).

On sait que, de façon usuelle, chaque pixel d'une image est géré par les trois couleurs primaires (rouge, vert, bleu), sur 8 bits chacune. Ce codage RVB (ou RGB en anglais pour « Red, Green, Blue ») consiste à représenter l'espace des couleurs à partir de ces trois composantes, les intensités de chacune de ces couleurs étant codées sur un octet (8 bits).

On connaît, de plus, une couche alpha permettant de fournir des informations concernant la gestion de la transparence.

Selon l'invention, pour pouvoir prendre en compte et transmettre des informations relatives à la transparence, on n'utilise pas la totalité des trois octets d'un pixel pour des informations relatives aux couleurs RVB. Mais, on affecte, pour chaque pixel d'une seconde image (reçue par une liaison 8 desdits moyens 3), une partie des bits de ces trois couleurs (rouge, vert, bleu) à des informations de transparence relatives à une couche alpha.

De plus :
- dans une première variante de réalisation préférée, les bits de la couche alpha sont réparties uniformément sur les trois couleurs ; et
- dans une seconde variante de réalisation, lesdits bits de la couche alpha sont réparties de façon non uniforme sur les trois couleurs, en privilégiant par exemple une couleur (le vert notamment).

L'objectif est d'obtenir une image visuellement acceptable. Le meilleur compromis est obtenu lorsque l'ensemble des composantes R, V, et B et la composante alpha sont codées chacune sur six bits, comme représenté sur la ligne L1 de la figure 2. Dans ce cas, les six bits de la composante alpha (mis en évidence par des traits interrompus) sont uniformément répartis (par deux) sur chacun des six bits (représentés par des traits continus) de chaque composante de couleur de manière à obtenir les octets R1, V1 et B1 représentés sur la ligne L2 de cette figure 2. Les informations ainsi encodées (qui comprennent donc des données sur la transparence) peuvent être transmises par un bus (liaison 11) qui n'est pas en mesure de transmettre telle quelle une couche alpha.

Par ailleurs, concernant le traitement matériel mis en oeuvre par la carte 9 :
- les moyens 12 décodent, pour chaque pixel d'une image reçue via la liaison 11, la combinaison nouvelle générée par les moyens 7, par exemple telle que représentée sur la ligne L2 de la figure 2, pour séparer l'information relative à la transparence des informations relatives aux couleurs ; et
- les moyens 13 fusionnent les deux images, à savoir l'image décodée (par les moyens 12) et ladite première image (reçue des moyens 3), en tenant compte de ladite information relative à la transparence pour gérer la transparence sur l'image résultante fusionnée, qui sera finalement affichée.

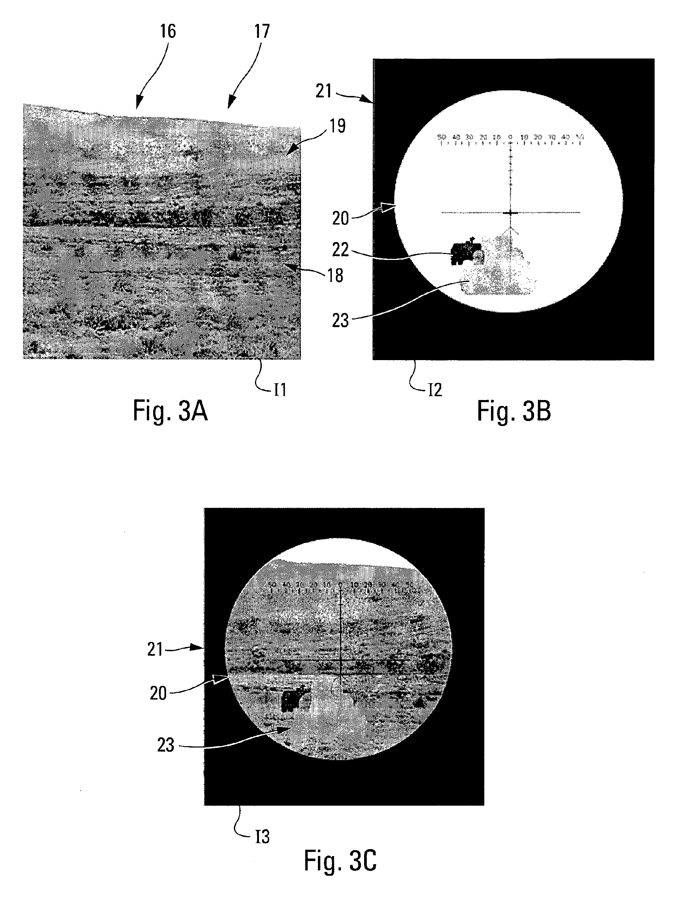

L'un des principaux avantages obtenus grâce à la présente invention est mis en évidence sur la figure 3C.

Les figures 3A, 3B, et 3C illustrent respectivement :
- une image I1 issue d'un premier flux vidéo, qui est reçue par les moyens 3, en l'occurrence une scène réelle 16 filmée par une caméra. Cette scène réelle 16 représente un paysage 17 comprenant un terrain plat 18 au premier plan et une petite colline 19 au second plan ;
- une image I2 issue d'un second flux vidéo, qui est reçue par les moyens 4, en l'occurrence une image virtuelle crée de façon usuelle par des moyens informatiques. Cette image virtuelle comprend un champ de vision 20 en forme de cercle, entouré d'un fond 21 noir. Ce champ de vision 20 peut représenter la partie de l'espace que voit un militaire au travers d'une lunette d'un système d'arme, par exemple d'un lance-missile antichar. Ce champ de vision 20 contient un char 22, ainsi qu'un nuage de fumée 23; et
- l'image résultante I3, qui est générée et affichée par le dispositif 1 conforme à la présente invention.

Sur cette image 13, on voit bien que la transparence du nuage de fumée 24 a bien été prise en compte conformément à la présente invention.

Ainsi, la présente invention permet de gérer la transparence, contrairement notamment à une incrustation usuelle de deux images, de type matérielle, telle que réalisée par la méthode dite de la « Chromakey » (incrustation d'image sur un fond de couleur uniforme), pour laquelle l'image est vue sur deux couches et les valeurs des trois octets RVB du pixel de l'image supérieure sont simplement remplacées par celles de l'image en dessous s'ils représentent une couleur uniforme dédiée à cette méthode.

La présente invention permet, en particulier, d'obtenir les avantages suivants :
- grâce notamment au traitement d'incrustation matériel (moyens 9), une optimisation de la latence de traitement (avec une latence maximale qui reste inférieure au seuil de perception du décalage). La marge acquise permet d'envisager des traitements d'images complémentaires, tels qu'un filtrage infrarouge ou une extraction de contour par exemple ;
- une anticipation de la génération de la vidéo (cibles virtuelles par exemple) lorsque l'on connaît les mouvements cibles ;
- une gestion de la transparence entre les différents flux vidéos, qui permet par exemple d'ajouter de la fumée 23, un nuage,...., lors de la superposition d'images virtuelles sur un paysage réel filmé ; et
- une indépendance par rapport aux types de flux vidéo numérique (DVI, CaméraLink, Gigavision,...) utilisés.

Par ailleurs, ledit dispositif 1 peut également comporter :
- des moyens 27, en particulier une caméra usuelle qui filme une scène réelle représentant par exemple un paysage ou un champ de bataille, pour générer ledit premier flux vidéo qui est transmis aux moyens 3 (via une liaison 28) ; et
- des moyens 29, en particulier des moyens informatiques permettant de créer des images virtuelles, pour générer ledit second flux vidéo qui est transmis aux moyens 4 (via une liaison 30).

En outre, dans un mode de réalisation particulier (non représenté), lesdits moyens 4 sont formés de manière à recevoir au moins deux secondes images, et lesdits moyens 9 sont formés de manière à superposer lesdites secondes images à ladite première image. Ainsi, dans ce mode de réalisation particulier, on met en oeuvre l'invention pour une pluralité de secondes images, c'est-à-dire que l'on superpose à chaque (première) image du premier flux vidéo (par exemple un flux réel généré par une caméra) plusieurs secondes images illustrant par exemple chacune une cible virtuelle (en mouvement ou non).

## Revendications

1. Procédé de superposition en temps réel d'images issues d'au moins deux flux vidéo, procédé selon lequel on réalise, de façon automatique et répétitive, la suite d'opérations successives suivante :
a) on reçoit une première image (I1) faisant partie d'un premier flux vidéo ;
b) on reçoit au moins une seconde image (I2) faisant partie d'au moins un second flux vidéo ;
c) on superpose ladite seconde image (I2) à ladite première image (I1) ; et
d) on affiche cette superposition,
procédé selon lequel de plus :
- à l'étape b) on affecte, pour chaque pixel de la seconde image (I2), une partie des trois composantes définissant la couleur constituant le pixel, à une composante alpha contenant une information relative à la transparence et permettant sa gestion, de manière à obtenir une image codée ;
- à l'étape c), au niveau d'une carte d'électronique numérique (9) :
• on décode ladite image codée pour extraire l'information relative à la transparence ; et
• on fusionne ladite image ainsi décodée et ladite première image (I1), en tenant compte de ladite information relative à la transparence, l'image (I3) résultant de cette fusion étant affichée à l'étape d) ; et
- ladite seconde image (I2) est générée de façon anticipée et elle est synchronisée sur ladite première image (11) à l'étape c).

2. Procédé selon la revendication 1,
**caractérisé en ce qu'**à l'étape b), on utilise une composante alpha qui est codée sur six bits.

3. Procédé selon l'une des revendications 1 et 2,
**caractérisé en ce que** les bits de la composante alpha sont répartis sur les trois composantes de couleurs constituant le pixel.

4. Procédé selon l'une des revendications 1 et 2,
**caractérisé en ce que** les bits de la composante alpha sont répartis de façon non uniforme sur les trois composantes de couleurs constituant le pixel.

5. Procédé selon l'une quelconque des revendications précédentes, **caractérisé en ce que** ladite carte d'électronique numérique (9) est pourvue d'un circuit de type FPGA.

6. Procédé selon l'une quelconque des revendications précédentes, **caractérisé en ce que** ladite seconde image (I2) est de type virtuel.

7. Procédé l'une quelconque des revendications précédentes, **caractérisé en ce que** ledit premier flux vidéo est généré par une caméra vidéo.

8. Procédé selon l'une quelconque des revendications précédentes, **caractérisé en ce que** l'on met en oeuvre les étapes b) à d) pour une pluralité de secondes images faisant partie respectivement d'une pluralité de seconds flux vidéo.

9. Procédé selon l'une quelconque des revendications précédentes, **caractérisé en ce qu'**à l'étape c), on réalise des traitements complémentaires sur l'image fusionnée.

10. Dispositif de superposition en temps réel d'images issues d'au moins deux flux vidéo, ledit dispositif (1) comportant :
- des premiers moyens (3) pour recevoir une première image (I1) faisant partie d'un premier flux vidéo ;
- des deuxièmes moyens (4) pour recevoir au moins une seconde image (I2) qui fait partie d'au moins un second flux vidéo et qui est générée de façon anticipée ;
- des troisièmes moyens (2) pour superposer ladite seconde image (I2) à ladite première image (I1), en la synchronisant sur cette première image (I1);
- des quatrièmes moyens (5) pour afficher cette superposition ; et
- des moyens (7) pour affecter, pour chaque pixel de chaque seconde image (I2), une partie des trois composantes définissant la couleur constituant le pixel, à une composante alpha contenant une information relative à la transparence et permettant sa gestion, de manière à obtenir une image codée,
lesdits troisièmes moyens (2) comprenant une carte d'électronique numérique (9) qui est formée de manière à décoder ladite image codée pour extraire l'information relative à la transparence, et à fusionner cette image ainsi décodée et ladite première image (I1), en tenant compte de ladite information relative à la transparence, l'image (I3) résultant de cette fusion étant affichée par lesdits quatrièmes moyens (5).

11. Dispositif selon la revendication 10,
**caractérisé en ce qu'**il comporte, de plus, des moyens (27) pour générer ledit premier flux vidéo et des moyens (29) pour générer ledit second flux vidéo.

12. Dispositif selon l'une des revendications 10 et 11,
**caractérisé en ce que** lesdits deuxièmes moyens (4) sont formés de manière à recevoir au moins deux secondes images faisant partie chacune d'un second flux vidéo correspondant, et **en ce que** lesdits troisièmes moyens (2) sont formés de manière à superposer lesdites secondes images à ladite première image.

13. Simulateur de tir,
**caractérisé en ce qu'**il comporte un dispositif (1) de superposition d'images en temps réel, tel que celui spécifié sous l'une quelconque des revendications 10 à 12.
